# EUROPÄISCHE PATENTSCHRIFT

(11) **EP 3 248 324 B1**
(45) Veröffentlichungstag und Bekanntmachung des Hinweises auf die Patenterteilung: **20.03.2019**
(21) Anmeldenummer: 16701728.4
(22) Anmeldetag: 22.01.2016
(51) Int. Cl.: H04L 9/08, G06Q 10/08, H04L 29/06, H04L 9/14, H04L 9/30, H04L 9/32

(54) **VERTEILTES BEARBEITEN EINES PRODUKTS AUF GRUND VON ZENTRAL VERSCHLÜSSELT GESPEICHERTEN DATEN**
DECENTRALISED OPERATING ON A PRODUKT USING CENTRALLY STORED ECRYPTED DATA
DES OPERATIONS DECENTRALISÉS SUR UN PRODUIT EN UTILISANT DES DONNÉES CHIFFRÉES DANS UN STORAGE CENTRAL

(30) Priorität: 23.01.2015 DE 102015000895
(43) Veröffentlichungstag der Anmeldung: 29.11.2017
(73) Patentinhaber: Giesecke+Devrient Mobile Security GmbH, 81677 München (DE)
(72) Erfinder: KAMM, Frank-Michael, 82041 Oberhaching (DE); STÖHR, Volker, 81827 München (DE)
(86) Internationale Anmeldenummer: PCT/EP2016/000125
(87) Internationale Veröffentlichungsnummer: WO 2016/116282

(56) Entgegenhaltungen:
- WO-A1-2009/040273
- US-A1- 2011 320 805
- US-A1- 2014 059 352

## Beschreibung

### Gebiet der Erfindung

Die Erfindung betrifft ein System und Verfahren zum verteilten Bearbeiten von zentral verschlüsselt gespeicherten Daten.

### Stand der Technik

In der Produktionslogistik werden Produkte mit Produkt-Tags, kurz Tags genannt, insbesondere Kontaktlos-Tags, beispielsweise RFID-Tags, versehen, in denen Produktdaten über das Produkt elektronisch abgespeichert sind. Mittels eines (Kontaktlos-) Lesers (z.B. RFID-Lesers) lassen sich die Produktdaten aus dem Tag auslesen und hierdurch Eigenschaften des vorliegenden Produkts ermitteln, sowie schreibende Einträge am Tag vornehmen. Als Produktdaten kann in einem sehr einfachen Fall (nur) eine Produkt-ID, also Identität, im Tag gespeichert sein.

Gerade komplexere Produkte werden typischerweise in einer Produktionskette an mehreren aufeinanderfolgenden Produktionsstationen bearbeitet. In diesem Fall können als Produktdaten im Tag Produktionsdaten aus vorhergehenden Produktionsschritten gespeichert sein, durch welche am Produkt vorzunehmende Produktionsschritte beeinflusst werden. Eine Produktionsstation, die das Produkt in Empfang nimmt, liest das Tag aus und erfährt hierdurch, welche Produktionsschritte (nachfolgend noch) am Produkt vorzunehmen sind. Nachdem die Produktionsstation die den Angaben im Tag entsprechenden Produktionsschritte durchgeführt hat, nimmt die Produktionsstation evtl. schreibende Einträge an den Produktdaten vor, beispielsweise, um einer nachfolgenden Produktionsstation relevante Daten für die nächsten durchzuführenden Produktionsschritte mitzuteilen.

Komplexe Produktdaten, insbesondere Produktionsdaten, können die Speicherkapazität eines einfachen Kontaktlos-Tags übersteigen. Eine Lösung zu diesem Problem sieht vor, dass im am Produkt angebrachten Produkt-Tag nur eine Zugriffsinformation (z.B. ein URL = Universal Ressource Locator) auf die Produktdaten abgespeichert ist und die Produktdaten selbst auf einem entfernten, über ein Kommunikations-Netzwerk erreichbaren Produktdaten-Server, "in der Cloud", abgespeichert sind. Mittels der Zugriffsinformation lassen sich die Produktdaten vom Produktdaten-Server abrufen und neue oder geänderte Produktdaten am Produktdaten-Server abspeichern.

Sind Produktdaten vertraulich, geheim oder aus sonstigen Gründen schützenswert, werden sie häufig verschlüsselt auf dem Produktdaten-Server abgelegt. In einer Produktionskette mit mehreren Produktionsstationen erzeugt die verschlüsselte Speicherung der Produktdaten das zu lösende Problem, jeder Produktionsstation Zugriff auf die Produktionsdaten im Klartext (also in unverschlüsselter Form) zu ermöglichen. Insbesondere bauen Produktionsschritte an einer Produktionsstation häufig auf Produktionsschritten an vorhergehenden Produktionsstationen auf. Hierfür muss jede Produktionsstation schreibende Vorgänge an den Produktdaten vornehmen und die geänderten Produktdaten den nachfolgenden Produktionsstationen zur Verfügung stellen. Beim Zugriff mehrerer Produktionsstationen auf dieselben Produktdaten ist es zudem wichtig, Maßnahmen zur Prüfung der Authentizität der Produktdaten und der Vertrauenswürdigkeit zugreifender Produktionsstationen vorzusehen.

Die deutsche Patentanmeldung DE 102013019487.3 beschreibt ein Verfahren zur gesicherten Speicherung von Daten in einem Cloud-Server. Dabei werden die Daten mit einem Dokumentenschlüssel verschlüsselt im Cloud-Server gespeichert. Der Dokumentenschlüssel ist mit einem öffentlichen Schlüssel einer vom Cloud-Server unterschiedlichen Sicherheitsinstanz verschlüsselt und ebenfalls auf dem Cloud-Speicher gespeichert. Die Sicherheitsinstanz, die auch den zum öffentlichen Schlüssel gehörigen privaten Schlüssel hat, kann den Dokumentenschlüssel entschlüsseln, der Cloud-Server hingegen nicht. Den entschlüsselten Dokumentenschlüssel stellt die Sicherheitsinstanz einem berechtigten Nutzer zur Entschlüsselung von Daten zur Verfügung.

Die Lösung aus DE 102013019487.3 wäre auch auf einen Zugriff auf Produktionsdaten durch eine Produktionskette anwendbar, an der mehrere Unternehmen beteiligt sind. Dabei müsste jede Produktionsstation einerseits den Cloud-Server kontaktieren und andererseits die Sicherheitsinstanz anrufen, um sich den Dokumentenschlüssel entschlüsseln zu lassen, um anschließend selbst die Produktdaten entschlüsseln zu können. In diesem Fall müssten alle Beteiligten der Produktionskette der Sicherheitsinstanz über Unternehmensgrenzen hinweg vertrauen und der Betreiber der Sicherheitsinstanz den Zugriff unternehmensfremder Produktionsstationen zulassen.

Das Dokument US 2011/0320805 A1 offenbart eine verschlüsselte Speicherung von Produktdaten eines Produkts in einem Produktdaten-Server (database) und ein Speichern einer Referenz auf die gespeicherten Produktdaten und eines Verschlüsselungsschlüssels in einem Tag, das an dem Produkt angebracht ist.

Das Dokument US 2014/059352 A1 offenbart Schlüsselmanagement-Verfahren, bei dem ein zweiter Schlüssel mit einem ersten Schlüssel verschlüsselt ist und der erste Schlüssel mit einem symmetrischen Master-Schlüssel verschlüsselt ist. Den Master-Schlüssel hält ein RFID-Tag. Das RFID-Tag entschlüsselt mit dem Master-Schlüssel den ersten Schlüssel, entschlüsselt mit dem ersten Schlüssel den zweiten Schlüssel und verschlüsselt den zweiten Schlüssel mit dem Master-Schlüssel.

### Zusammenfassung der Erfindung

Der Erfindung liegt die Aufgabe zu Grunde, ein zuverlässiges System und Verfahren zum verteilten Bearbeiten, insbesondere Speichern und Auslesen, von zentral verschlüsselt gespeicherten Daten zu schaffen, bei dem mehrere Produktionsstationen Zugriff auf die Produktdaten im Klartext benötigen.

Die Aufgabe wird gelöst durch ein System nach Anspruch 1, sowie ein Verfahren nach Anspruch 3 und ein Tag nach Anspruch 14. Vorteilhafte Ausgestaltungen der Erfindung sind in den abhängigen Ansprüchen angegeben.

Das System nach Anspruch 1 ist zum Speichern und Auslesen von Produktdaten eingerichtet. Es umfasst: - einen Produktdaten-Server, auf dem eine Produktdaten-Datei zentral gespeichert oder speicherbar ist, in welcher umfasst sind: -- die Produktdaten in mit einem Dokumentenschlüssel verschlüsselter Form, und -- der Dokumentenschlüssel in mit einem öffentlichen Schlüssel eines asymmetrischen Schlüsselpaars verschlüsselter Form; - ein Produkt; - ein am Produkt dezentral angebrachtes Tag, in dem eine Zugriffsinformation auf die Produktdaten-Datei auf dem Produktdaten-Server gespeichert oder speicherbar ist; - zumindest eine dezentrale Produktionsstation, oder mehrere Produktionsstationen, die zur Bearbeitung des Produkts gemäß den Produktdaten eingerichtet ist bzw. sind.

Das System ist dadurch gekennzeichnet, dass: - im Tag ein asymmetrisches Schlüsselpaar umfassend einen privaten Tag-Schlüssel und einen öffentlichen Tag-Schlüssel gespeichert ist, wobei der private Tag-Schlüssel für die Produktionsstation unzugänglich ist; - in der Produktionsstation ein asymmetrisches Schlüsselpaar umfassend einen privaten Stations-Schlüssel und einen öffentlichen Stations-Schlüssel gespeichert ist; - im Tag eine Verschlüsselungs-Einrichtung eingerichtet ist; und - die Produktdaten in der Produktdaten-Datei auf dem Produktdaten-Server mit dem öffentlichen Tag-Schlüssel verschlüsselt sind.

Die Tags sind kompakt und mobil und können daher an Produkten (umfassend Zwischenprodukte) leicht angebracht werden. Gleichzeitig können größere Datenmengen, die einem Tag zugeordnet sind (z.B. Produktionshistorie, Prozessdaten aus Produktionsschritten, Information über vorgeschriebene und noch durchzuführende Produktionsschritte) in der Cloud auf dem Produktdaten-Server abgelegt werden. Insbesondere für firmenübergreifende Lieferketten wird so die Nutzung eines Cloud Dienstes ermöglicht. Das Vorsehen eigener asymmetrischer Schlüsselpaare im Tag und in allen Produktionsstationen ermöglicht ein zentrales Abspeichern der mit dem Dokumentenschlüssel verschlüsselten Produktdaten und des verschlüsselten Dokumentenschlüssels mit einem universellen Schlüsselsystem, nämlich demjenigen des Tags. Da das Schlüsselsystem des Tags verwendet wird und nicht das des Produktdaten-Servers, ist zudem der Produktdaten-Server als reiner Cloud-Dienstanbieter vom Zugriff auf die Produktdaten im Klartext ausgeschlossen. Zugleich, in Zusammenwirkung mit der Verschlüsselungs-Einrichtung des Tags, wird die Möglichkeit bereitgestellt, im Tag eine Umverschlüsselung vom Schlüsselsystem des Tags auf das Schlüsselsystem einer Produktdaten anfragenden Produktionsstation durchzuführen. Durch das Prinzip der Umverschlüsselung können weder der Produktdaten-Server des Cloud Anbieters noch unautorisierte Nutzer (z.B. unberechtigte Produktionsstationen oder Angreifer) auf die Produktdaten zugreifen. Trotz des externen Speicherortes bleiben die Produktdaten also sicher. Die Umverschlüsselung erfordert, dass der berechtigte Nutzer in Gestalt der Produktionsstation auch tatsächlich im Kontakt mit dem Tag steht, das (Zwischen-)Produkt mit dem Tag also physisch vorhanden ist. Bearbeitung von Produktdaten ohne dass ein Produkt und Tag vorhanden ist, ist dagegen wirkungsvoll verhindert.

Daher ist gemäß Anspruch 1 ein zuverlässiges System und Verfahren zum verteilten Bearbeiten von zentral verschlüsselt gespeicherten Daten geschaffen, bei dem mehrere Produktionsstationen Zugriffsmöglichkeit auf die Produktdaten im Klartext haben.

Im Vergleich zur Lösung aus DE 102013019487.3 ist zudem die Herausforderung umgangen, dass zwischen allen beteiligten Produktionsstationen eine Einigung über eine universell anerkannte Sicherheitsinstanz erzielt werden muss. Somit ist die erfindungsgemäße Lösung gerade auf Produktionsketten vorteilhaft anwendbar, die sich über mehrere organisatorische Einheiten (z.B. mehrere Unternehmen) hinweg erstrecken.

Wahlweise ist die Verschlüsselungs-Einrichtung im Tag dazu eingerichtet:
- in dem Fall, wenn die Produktionsstation Produktdaten, die mit dem Dokumentenschlüssel verschlüsselt worden sind, beim Produktdaten-Server abspeichern möchte, den öffentlichen Tag-Schlüssel an die Produktionsstation bereitzustellen, so dass die Produktionsstation den Dokumentenschlüssel mit dem öffentlichen Tag-Schlüssel verschlüsseln kann; oder/und
- in dem Fall wenn, unter Verwendung der Zugriffsinformation aus dem Tag, die Produktdaten-Datei aus dem Produkt-Server in die Produktionsstation ausgelesen wird, den verschlüsselten Dokumentenschlüssel vom öffentlichen Tag-Schlüssel auf den öffentlichen Stations-Schlüssel umzuverschlüsseln (also z.B. erst mit dem privaten Tag-Schlüssel zu entschlüsseln und dann mit dem öffentlichen Stations-Schlüssel neu zu verschlüsseln) und den hiermit umverschlüsselten Dokumentenschlüssel an die Produktionsstation bereitzustellen.

Ein Verfahren zum Speichern von Produktdaten durch die Produktionsstation auf den Produktdaten-Server, umfasst die einander ergänzenden Datei-Erstellungs-Schritte gemäß Anspruch 3 und Speicher-Schritte gemäß Anspruch 5. Vom Grundsatz her verschlüsselt die Produktionsstation die Produktdaten mit einem entweder selbst erzeugten oder alternativ beschafften Dokumentenschlüssel, und den Dokumentenschlüssel mit dem öffentlichen Schlüssel des Tags, und schreibt beide somit erstellten Chiffrate in eine Produktdaten-Datei. Die Produktdaten-Datei wird beim Produktdaten-Server in der Cloud abgelegt. Der Produktdaten-Server wiederum sendet eine Zugriffsinformation (z.B. URL), welche ein Zugreifen auf die gespeicherte Produktdaten-Datei ermöglicht, an die Produktionsstation. Die Produktionsstation sendet die Zugriffsinformation weiter an das Tag, welches sie bei sich selbst (im Tag) speichert. Somit sind die Produktdaten in der Cloud und der Link auf die Produktdaten im Tag gespeichert. Das zur Verschlüsselung verwendete Schlüsselsystem ist dasjenige des Tags.

Wahlweise umfasst das Verfahren weiter die Schritte: - anlässlich des Auslesens des öffentlichen Tag-Schlüssels aus dem Tag an die Produktionsstation, gegenseitige Authentisierung zwischen dem Tag und der Produktionsstation; oder/und - anlässlich des Sendens der Zugriffsinformation vom Produktdaten-Server an die Produktionsstation, gegenseitige Authentisierung zwischen dem Produktdaten-Server und der Produktionsstation.

Wahlweise wird - anlässlich des Sendens der Zugriffsinformation von der Produktionsstation an das Tag - mittels des privaten Stations-Schlüssels eine Stations-Signatur erzeugt, die Stations-Signatur mit der Zugriffsinformation an das Tag gesendet, sowie die Stations-Signatur im Tag gespeichert.

Ein Verfahren zum Auslesen von Produktdaten durch die Produktionsstation umfasst die Schritte nach Anspruch 9. Vom Grundsatz her liest die Produktionsstation die Zugriffsinformation aus dem Tag aus und mit der Zugriffsinformation die Produktdaten-Datei vom Produktdaten-Server aus. Die Produktionsstation lässt sich den im Tag-System verschlüsselten Dokumentenschlüssel durch das Tag auf das Stations-eigene Schlüsselsystem umverschlüsseln. Den umverschlüsselten Dokumentenschlüssel kann die Produktionsstation selbst entschlüsseln, mit ihrem eigenen privaten Schlüssel. Mit dem so gewonnenen Dokumentenschlüssel kann die Produktionsstation die Produktdaten entschlüsseln.

Das Auslese-Verfahren umfasst wahlweise weiter die Schritte:
- anlässlich des Auslesens der Zugriffsinformation aus dem Tag: Aufbau eines sicheren Kommunikationskanals zwischen dem Tag und der Produktionsstation, oder/und gegenseitige Authentisierung zwischen dem Tag und der Produktionsstation; oder/und
- nach dem Auslesens der Zugriffsinformation aus dem Tag: durch die Produktionsstation, Authentisierung der Zugriffsinformation, insbesondere durch Verifizierung einer der Zugriffsinformation beigefügten, mit einem privaten Stations-Schlüssel (insbesondere derjenigen Produktionsstation, die die Produktdaten beim Produkt-Server gespeichert hat) erzeugten Signatur mittels des entsprechenden öffentlichen Stations-Schlüssels.

Wahlweise wird, beim Speichern und/oder beim Auslesen von Produktdaten gleichermaßen, die bei der gegenseitigen Authentisierung erfolgende Authentisierung der Produktionsstation gegenüber dem Produktdaten-Server mittels eines vom Tag an die Produktionsstation gesendeten, und wahlweise zudem durch das Tag erzeugten, Authentisierungstokens durchgeführt.

Wahlweise sind zumindest manche öffentliche Schlüssel, vorzugsweise alle öffentlichen Schlüssel, mittels des Tags verifizierbar, insbesondere mittels eines im Tag abgespeicherten, von einer Zertifizierungsstelle ausgestellten Zertifikats für den jeweiligen öffentlichen Schlüssel. Wahlweise bringt jeder Besitzer (Tag bzw. Produktionsstation) eines Schlüsselpaars auch das passende, von der Zertifizierungsstelle ausgestellte Zertifikat mit, mit dem der jeweilige öffentliche Schlüssel verifizierbar ist. Hierdurch können Tag und Produktionsstationen die öffentlichen Schlüssel der jeweils anderen Parteien (andere Produktionsstation bzw. Tag) verifizieren.

In einem erfindungsgemäßen Tag ist ein asymmetrisches Schlüsselpaar umfassend einen privaten Tag-Schlüssel und einen öffentlichen Tag-Schlüssel gespeichert. Der private Tag-Schlüssel ist für Produktionsstationen, die über das Tag auf den Produktdaten-Server zugreifen, unzugänglich.

Im Tag ist eine Verschlüsselungs-Einrichtung vorgesehen, die dazu eingerichtet ist, wenn eine Produktionsstation mit dem Dokumentenschlüssel verschlüsselte Produktdaten beim Produktdaten-Server speichern möchte, den öffentlichen Tag-Schlüssel zur Verschlüsselung des Dokumentenschlüssels an die Produktionsstation bereitzustellen. Die Produktionsstation kann nun den Dokumentenschlüssel mit dem öffentlichen Tag-Schlüssel verschlüsseln und zusammen mit den verschlüsselten Produktdaten in einer Produktdatendatei auf dem Produktdaten-Server ablegen.

Die Verschlüsselungs-Einrichtung ist weiter dazu eingerichtet, wenn eine Produktionsstation unter Verwendung der Zugriffsinformation aus dem Tag eine Produktdaten-Datei aus dem Produkt-Server auslesen möchte, den verschlüsselten Dokumentenschlüssel für die Produktionsstation vom öffentlichen Tag-Schlüssel auf den öffentlichen Stations-Schlüssel umzuverschlüsseln und den hiermit umverschlüsselten Dokumentenschlüssel an die Produktionsstation bereitzustellen. Den umverschlüsselten Dokumentenschlüssel kann die Produktionsstation mit dem eigenen privaten Schlüssel entschlüsseln.

### Kurze Beschreibung der Zeichnungen

Im Folgenden wird die Erfindung an Hand von Ausführungsbeispielen und unter Bezugnahme auf die Zeichnungen näher erläutert, in der zeigen:
- Fig. 1: ein System zur Veranschaulichung der Erfindung;
- Fig. 2: ein Protokoll-Schema über das Speichern von Produktdaten aus einer Produktionsstation in den Produktdaten-Server, gemäß einer Basis-Ausführungsform der Erfindung;
- Fig. 3: ein Protokoll-Schema über das Auslesen von Produktdaten aus einem Produktdaten-Server in eine Produktionsstation, gemäß einer Basis-Ausführungsform der Erfindung;
- Fig. 4: ein detailliertes Protokoll-Schema über das Speichern von Produktdaten aus einer Produktionsstation in den Produktdaten-Server, gemäß einer komplexeren Ausführungsform der Erfindung;
- Fig. 5: ein detailliertes Protokoll-Schema über das Auslesen von Produktdaten vom Produktdaten-Server in eine Produktionsstation, gemäß einer komplexeren Ausführungsform der Erfindung.

### Detaillierte Beschreibung von Ausführungsbeispielen

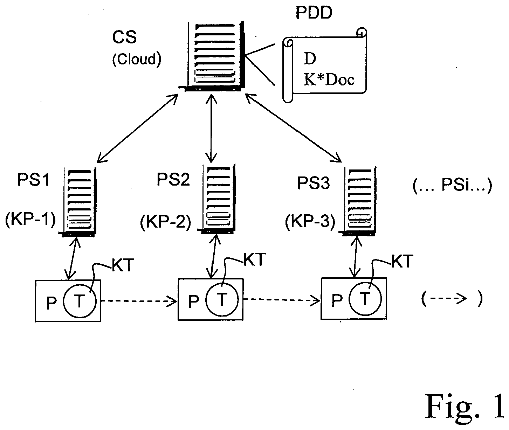

Fig. 1 zeigt, zur Veranschaulichung der Erfindung, ein System zum Auslesen und Speichern von Produktdaten PD.

Das System umfasst einen Produktdaten-Server oder Cloud-Server CS, auf dem Produktdaten in einer Produktdaten-Datei PDD in der Cloud gespeichert sind.

Das System umfasst weiter mehrere, hier beispielhaft drei, Produktionsstationen PS1, PS2, PS3, an denen ein Produkt P bearbeitet werden soll. Zur Bearbeitung wird das Produkt P von Station zu Station weitergereicht, im Beispiel aus Fig. 1 in der Reihenfolgen PS1, PS2, PS3, .... Jede Produktionsstation PSi führt Bearbeitungsschritte am Produkt P durch und baut dabei auf Arbeitsschritte auf, welche durch vorangehende Produktionsstationen PSj, j<i, durchgeführt wurden. In jeder der Produktionsstationen PS1, PS2, PS3, ist ein Computersystem umfasst. Für die Zwecke der Erfindung wird die Produktionsstation PSi mit dem darin umfassten Computersystem gleichgesetzt. Die zur Bearbeitung des Produkts P vorgesehenen Funktionalitäten der Produktionsstationen PSi sind für die Erfindung unbedeutend. Die Art des Produkts P ist für die Erfindung nicht maßgeblich. Die einzelnen Produktionsstationen PSi lesen Produktdaten Doc vom Produktdaten-Server CS aus und ermitteln hierdurch, welche Produktionsschritte durchzuführen sind. Jede Produktionsstation PSi protokolliert die von ihr durchgeführten Produktionsschritte durch Änderungen in den Produktdaten Doc und speichert die geänderten Produktdaten Doc beim Produktdaten-Server CS, für nachfolgende Produktionsstationen. Die Produktdaten Doc sind in verschlüsselter Form Doc* in einer Produktdatendatei PDD auf dem Produktdaten-Server CS gespeichert, wie weiter unten im Detail beschrieben ist.

In den Produktionsstationen PS1, 2, 3 ist jeweils ein asymmetrisches Schlüsselpaar umfassend einen privaten Stations-Schlüssel und einen öffentlichen Stations-Schlüssel KP gespeichert. Die Produktionsstationen PSi umfassen weiter Verschlüsselungs-Einrichtungen.

Am Produkt P ist ein Kontaktlos-Tag T angebracht, in dem eine Zugriffsinformation URL auf die Produktdaten-Datei PDD auf dem Produktdaten-Server (Cloud Server) CS gespeichert ist. Im Tag T ist weiter ein asymmetrisches Schlüsselpaar umfassend einen privaten Tag-Schlüssel PrivKeyTag und einen öffentlichen Tag-Schlüssel KT = PubKeyTag gespeichert. Der private Tag-Schlüssel für die Produktionsstationen PSi, i = 1,2,3(,...) unzugänglich. Weiter ist im Tag T eine Verschlüsselungs-Einrichtung eingerichtet.

Die Produktdaten Doc in der Produktdaten-Datei PDD auf dem Produktdaten (Cloud) Server CS sind mit einem Dokumentenschlüssel KDoc verschlüsselt, zu D. Der Dokumentenschlüssel KDoc wiederum ist mit dem öffentlichen Tag-Schlüssel KT verschlüsselt und als verschlüsselter Dokumentenschlüssel K*Doc ebenfalls in der Produktdaten-Datei PDD abgespeichert.

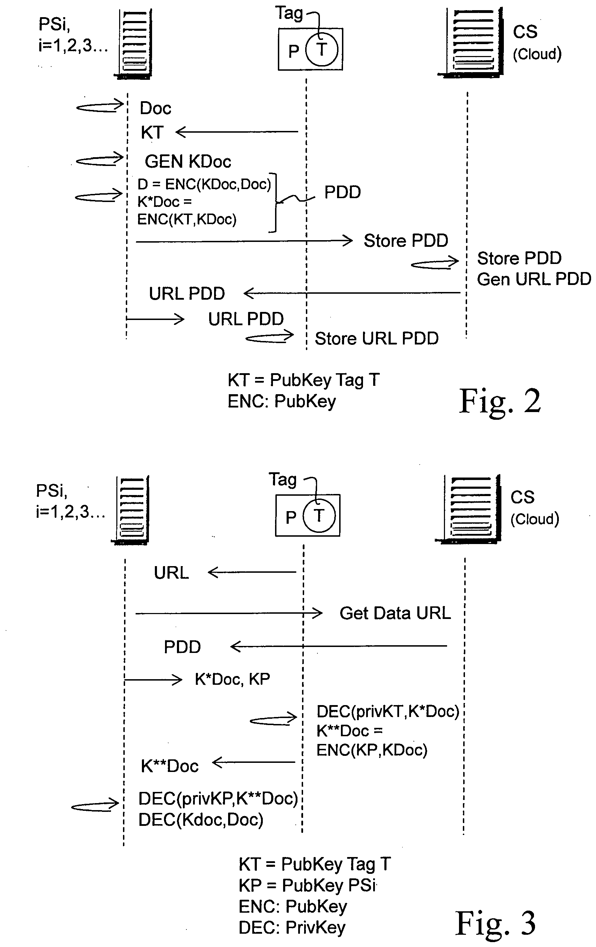

Fig. 2 zeigt ein Protokoll-Schema über das Speichern von Produktdaten Doc von einer Produktionsstation PSi in den Produktdaten-Server CS, gemäß einer Basis-Ausführungsform der Erfindung. Zunächst werden die Produktdaten Doc an der Produktionsstation PSi bereitgestellt. Durch die Produktionsstation PSi wird ein Dokumentenschlüssel KDoc entweder selbst erzeugt oder anderweitig bereitgestellt. Die Produktionsstation PSi verschlüsselt die Produktdaten Doc mit dem Dokumentenschlüssel KDoc zu D = enc (KDoc, Doc). Weiter liest die Produktionsstation PSi den öffentlichen Tag-Schlüssel KT aus dem Tag T aus. Dieses Auslesen kann vor oder nach dem Verschlüsseln der Produktdaten Doc erfolgen, die Reihenfolge ist unerheblich. Die Produktionsstation PSi verschlüsselt den Dokumentenschlüssel KDoc mit dem Tag-Schlüssel KT zu K*Doc = enc (KT, KDoc). Weiter erzeugt die Produktionsstation PSi eine Produktdaten-Datei PDD umfassend die mit dem Dokumentenschlüssel KDoc verschlüsselten Produktdaten D, und den mit dem öffentlichen Tag-Schlüssel KT verschlüsselten Dokumentenschlüssel K*Doc. Die Produktionsstation PSi sendet die Produktdaten-Datei PDD an den Produktdaten-Server CS. Beim Produktdaten-Server CS wird die Produktdaten-Datei PDD gespeichert. Weiter wird durch den Produktdaten-Server CS eine Zugriffsinformation (d.h. ein Link) URL auf die gespeicherte Produktdaten-Datei PDD erzeugt und an die Produktionsstation PSi gesendet. Die Produktionsstation PSi sendet die Zugriffsinformation URL an das Tag T, welches die Zugriffsinformation URL speichert. Somit sind die Produktdaten Doc verschlüsselt, als D, beim Produktdaten-Server CS gespeichert, und im Tag T ist eine Zugriffsinformation URL auf die Produktdatendatei PDD (enthaltend Doc) gespeichert. Die maßgeblichen Schlüssel für ein Wiederauslesen bzw. Entschlüsseln der Produktdaten Doc sind im Tag T gespeichert.

Fig. 3 zeigt ein Protokoll-Schema über das Auslesen von Produktdaten Doc aus einem Produktdaten-Server CS in eine Produktionsstation PSi, gemäß einer Basis-Ausführungsform der Erfindung.

Die Produktionsstation PSi liest die Zugriffsinformation URL aus dem Tag T aus und liest unter Verwendung der aus dem Tag T ausgelesenen Zugriffsinformation URL die Produktdaten-Datei PDD, umfassend die verschlüsselten Produktdaten D = enc(KDoc,Doc) und den verschlüsselten Dokumentenschlüssel K*Doc, vom Produktdaten-Server CS. Die Produktionsstation PSi überträgt den verschlüsselten Dokumentenschlüssel K*Doc und den eigenen öffentlichen Stations-Schlüssel KP an das Tag T. Das Tag T umverschlüsselt den Dokumentenschlüssel K*Doc vom öffentlichen Tag-Schlüssel KT auf den öffentlichen Stations-Schlüssel KP. Zum Umverschlüsseln entschlüsselt das Tag T den verschlüsselten Dokumentenschlüssel K*Doc mit dem eigenen privaten Tag-Schlüssel und verschlüsselt den hierdurch im Klartext erhaltenen Dokumentenschlüssel KDoc neu mit dem von der Produktionsstation PSi erhaltenen öffentlichen Stations-Schlüssel KP zu einem Chiffrat K**Doc=enc(KP,KDoc). Danach sendet das Tag T den umverschlüsselten Dokumentenschlüssel K**Doc an die Produktionsstation PSi. Die Produktionsstation PSi entschlüsselt den umverschlüsselten Dokumentenschlüssel K**Doc mit dem eigenen privaten Schlüssel der Produktionsstation PSi. Mit dem hierdurch im Klartext erhaltenen Dokumentenschlüssel KDoc entschlüsselt die Produktionsstation PSi die Produktdaten D zurück zu Doc.

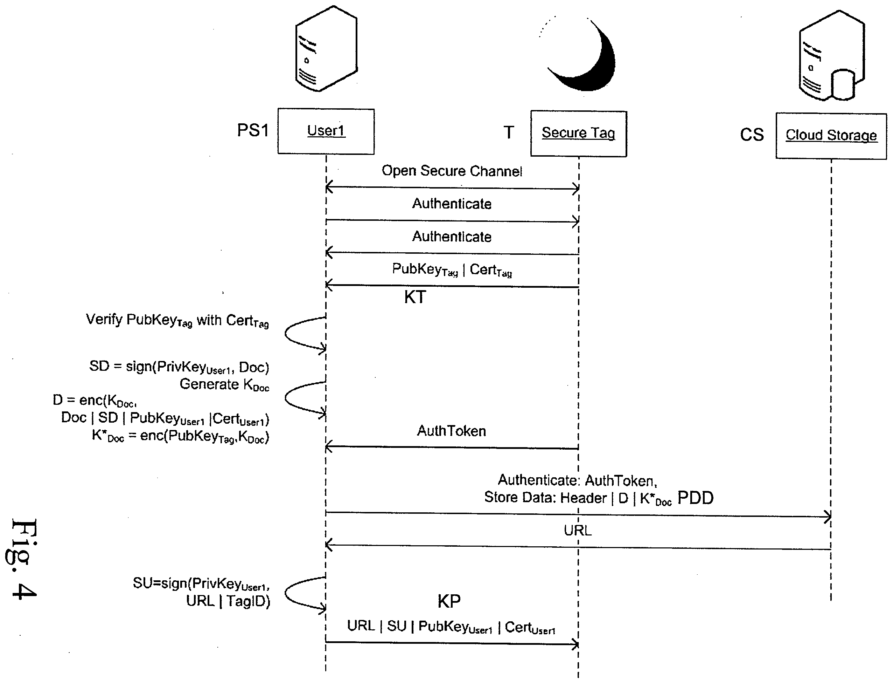

Fig. 4 zeigt ein detailliertes Protokoll-Schema über das Speichern von Produktdaten Doc aus einer Produktionsstation PS1 in den Produktdaten-Server CS, gemäß einer komplexeren Ausführungsform der Erfindung. Die Produktdaten Doc werden in einer Datei bereitgestellt. Im Unterschied zur Ausführungsform aus Fig. 2 sind an mehreren Positionen des Verfahrensablaufs Authentisierungsschritte vorgesehen, wie sie in der praktischen Implementierung des Verfahrens sinnvoll sind. Genauer bauen, vor der Übertragung des öffentlichen Tag-Schlüssels KT an die Produktionsstation PS1, Tag T und Produktionsstation PS1 einen sicheren Kommunikationskanal auf. Zunächst authentisiert sich die Produktionsstation PS1 (Nutzer1 / User1) gegenüber dem Tag (Secure Tag) T, wie durch den Pseudo-Befehlscode "Authenticate" angedeutet. Danach authentisiert sich das Tag T, ebenfalls mit "Authenticate", gegenüber der Produktionsstation PS1. Im Rahmen der Authentisierung kann der öffentliche Tag-Schlüssel KT an die Produktionsstation PS1 übertragen worden sein. Falls nicht, wird nun der öffentliche Tag-Schlüssel KT = PubKey-Tag an die Produktionsstation PS1 übertragen. Weiter überträgt das Tag T ein Zertifikat Cert-Tag an die Produktionsstation PS1. Mit dem Zertifikat Cert-Tag und dem der Produktstation PSi bekannten öffentlichen Schlüssel der Zertifizierungsstelle (CA, Certification Authority) verifiziert die Produktionsstation den öffentlichen Tag-Schlüssel KT. Weiter erzeugt die Produktionsstation PS1 mit ihrem eigenen privaten Schlüssel PrivKey-User1 eine Signatur SD über die Produktdaten Doc, gemäß SD = sign (PrivKey-User1, Doc). Anschließend erzeugt die Produktionsstation PS1 (=Nutzer1/ User1) einen Dokumentenschlüssel KDoc, bildete eine Konkatenation aus den Produktdaten Doc, der Signatur, dem eigenen öffentlichen Schlüssel KP=PubKey-User1 und einem eigenen Zertifikat Cert-Userl, und verschlüsselt die Konkatenation mit dem Dokumentenschlüssel KDoc zu einem Chiffrat D = enc(KDoc, Doc/SD/PubKey-User1/Cert-User1). Der genaue Zeitpunkt des Erzeugens des Dokumentenschlüssels KDoc ist nicht maßgeblich und kann insbesondere vor oder nach der Signaturerzeugung SD liegen. Den Dokumentenschlüssel KDoc verschlüsselt die Produktionsstation PS1 mit dem öffentlichen Tag-Schlüssel KT=PubKey-Tag zu einem Chiffrat K*Doc. Als nächstes fordert die Produktionsstation PS1 vom Tag T ein Authentisierungstoken für die Authentisierung gegenüber dem Produktdaten-Server CS an und bekommt das Authentisierungstoken vom Tag T bereitgestellt. Mittels des Authentisierungstokens authentisiert sich die Produktionsstation PS1 gegenüber dem Produktdaten-Server CS. In derselben Kommunikationssitzung erzeugt die Produktionsstation PS1 eine Produktdaten-Datei PDD, welche die Chiffrate D und K*Doc, also die verschlüsselten Produktdaten Doc und den verschlüsselten Dokumentenschlüssel KDoc und einen Header mit weiteren Informationen zur Verwaltung der Produktdaten-Datei PDD umfasst und sendet sie an den Produktdaten-Server CS. Beim Produktdaten-Server CS wird die Produktdaten-Datei PDD abgespeichert. Der Produktdaten-Server CS erzeugt eine Zugriffsinformation URL auf die Produktdaten-Datei PDD und sendet sie an die Produktionsstation PS1 zurück. Die Produktionsstation PS1 signiert die Zugriffsinformation URL und einen Tag-Identifikator Tag-ID des Tag T mit ihrem eigenen privaten Stations-Schlüssel zu einer Signatur SU = sign(PrivKey-User1, URL/Tag-ID) und sendet die Zugriffsinformation URL, die Signatur SU, das Zertifikat Cert-Userl und ihren eigenen öffentlichen Stations-Schlüssel KP an das Tag T, welches die gesendeten Daten URL, SU, KP; Cert-Userl im Tag T abspeichert. Statt der Signatur SU kann alternativ eine Tag-Signatur im Tag abgespeichert werden, insbesondere eine aus der Signatur SU abgeleitete Tag-Signatur, so dass nachfolgende Produktionsstationen, die die Produktdaten wieder auslesen, nicht der Vorgänger-Produktstation, sondern nur dem Tag trauen müssen. Das Tag T enthält nun eine Zugriffsinformation URL auf verschlüsselte Produktdaten PD auf dem Produktdaten-Server CS, sowie eine Signatur SU und einen öffentlichen Produkt-Stations-Schlüssel KP, die einer nachfolgenden Produktionsstation PSi ermöglichen zu prüfen, ob zuvor eine berechtigte Produktionsstation Daten in das Tag T und in den Produktdaten-Server CS gespeichert hat.

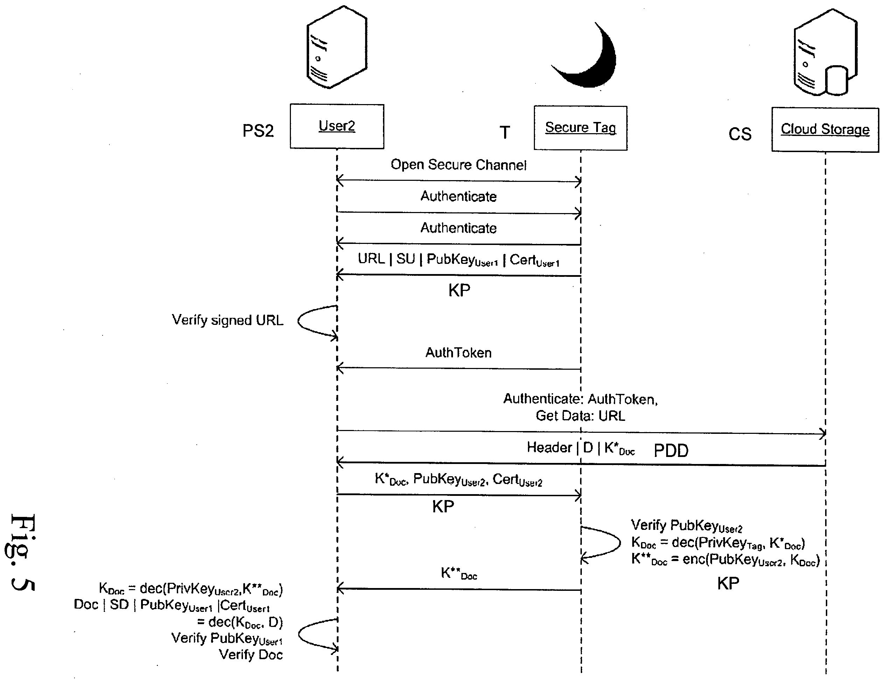

Fig. 5 zeigt ein detailliertes Protokoll-Schema über das Auslesen von Produktdaten PD vom Produktdaten-Server CS in eine andere, nachfolgende Produktionsstation PS2 = User2 als diejenige PS1 aus Fig. 4, gemäß einer komplexeren Ausführungsform der Erfindung, nachdem eine Produktionsstation PS1 ein Schreiben von Produktdaten vorgenommen hat, z.B. gemäß Fig. 4. Im Unterschied zur Ausführungsform aus Fig. 3 sind an mehreren Positionen des Verfahrensablaufs Authentisierungsschritte vorgesehen, wie sie in der praktischen Implementierung des Verfahrens sinnvoll sind. Genauer bauen, vor der Übertragung der Zugriffsinformation URL und des öffentlichen Tag-Schlüssels KT an die Produktionsstation PS2, Tag T und Produktionsstation PS2 einen sicheren Kommunikationskanal auf. Zunächst authentisiert sich die Produktionsstation PS2 (Nutzer2 / User2) gegenüber dem Tag (Secure Tag) T, wie durch den Pseudo-Befehlscode "Authenticate" angedeutet. Danach authentisiert sich das Tag T, ebenfalls mit "Authenticate", gegenüber der Produktionsstation PS2. Das Tag antwortet mit der signierten Zugriffsinformation URL der Produktdaten-Datei PDD beim Produktdaten-Server (Cloud Server) CS. Die Produktionsstation PS2 verifiziert die Korrektheit der Zugriffsinformation URL mit der Signatur SU, dem öffentlichen Schlüssel KP=PubKey1 und dem Zertifikat Cert-Userl, die Produktionsstation PS2 aus dem Tag T ausliest, und die zuvor die vorangehende Produktionsstation PS1 in das Tag T geschrieben hat. Als nächstes fordert die Produktionsstation PS2 vom Tag T ein Authentisierungstoken für die Authentisierung gegenüber dem Produktdaten-Server CS an und bekommt das Authentisierungstoken vom Tag T bereitgestellt. Mittels des Authentisierungstokens authentisiert sich die Produktionsstation PS2 gegenüber dem Produktdaten-Server CS. In derselben Kommunikationssitzung sendet die Produktionsstation PS2 einen Datenauslesebefehl "Get Data URL" an den Produktdaten-Server CS, mit der Aufforderung, die am Speicherort URL abgelegten Daten, also die Produktdaten-Datei PDD, an die Produktionsstation PS2 zu senden und lädt hierdurch die Produktdaten-Datei PDD (Header/D/K*Doc) (D = enc(KDoc, Doc/SD/PubKey-Userl/Cert-Userl)) vom Produktdaten-Server CS herunter in die Produktionsstation PS2. Die Produktionsstation PS2 extrahiert aus der Produktdaten-Datei PDD den mit dem öffentlichen Tag-Schlüssel KT verschlüsselten Dokumentenschlüssel K*Doc und sendet ihn an das Tag T, zusammen mit dem eigenen öffentlichen Stations-Schlüssel KP=PubKey-User2 der Produktionsstation PS2 und einem eigenen Zertifikat Cert-User2, erstellt mit dem eigenen privaten Stations-Schlüssel der Produktionsstation PS2. Das Tag T überprüft den öffentlichen Stations-Schlüssel KP=PubKey-User2 der Produktionsstation PS2 mit dem Zertifikat Cert-User2 mit dem Befehl "Verify". Danach entschlüsselt das Tag T den verschlüsselten Dokumentenschlüssel K*Doc mit dem Tageigenen privaten Tag-Schlüssel PrivKeyTag (KDoc=dec (PrivKeyTag, K*Doc)) und verschlüsselt ihn neu mit dem öffentlichen Stations-Schlüssel KP=PubKey-User2 der Produktionsstation PS2 (K**Doc= enc (PubKeyUser2,KDoc)). Das Tag sendet den neu verschlüsselten Dokumentenschlüssel K**Doc an die Produktionsstation PS2 (User2). Der öffentliche Schlüssel KP = PubKeyUser1, das Zertifikat Cert-Userl und zugehörige Signaturen wurden bereits zusammen mit der Zugriffsinformation URL aus dem Tag T ausgelesen bzw. sind in der Produktdatendatei PDD enthalten. Die Produktionsstation PS2 (User2) entschlüsselt mit ihrem eigenen privaten Stations-Schlüssel PrivKey-User2 den neu verschlüsselten Dokumentenschlüssel K**Doc zum Dokumentenschlüssel KDoc im Klartext und mit diesem die Produktdaten Doc. Mit dem angehängten Zertifikat Cert-Userl des Dokumentenautors verifiziert die Produktionsstation PS2 die Korrektheit des öffentlichen Stations-Schlüssels KP = PubKey-User1 des Dokumentenautors. Mit der Signatur SD des Dokumentenautors und dem öffentlichen Stations-Schlüssel KP=PubKey-User1 verifiziert die Produktionsstation PS2 die Korrektheit des Dokuments der Produktdaten Doc.

Die zweite Produktionsstation PS2 hat nun also die entschlüsselten und verifizierten Produktdaten Doc im Klartext vorliegen, mit allen Änderungen die die vorangehende Produktionsstation PS1 an den Produktdaten Doc vorgenommen hat. Das Tag T hat dabei die Funktion, selbst einen öffentlichen Schlüssel KT = PubKey-Tag für die dauerhafte verschlüsselte Speicherung von Produktdaten PD beim Produktdaten-Server CS bereitzustellen. Das Tag T hat weiter die Funktion, auf Anfrage einer Produktionsstation PSi eine Umverschlüsselung vom öffentlichen Tag-Schlüssel KT = PubKey-Tag auf den öffentlichen Stations-Schlüssel KP = PubKey-Useri, i = 1, 2, 3, ... vorzunehmen, so dass die anfragende Produktionsstation PSi, i = 1, 2, 3, ... die Produktdaten Doc im Klartext bekommt.

In Fig. 4, 5 wurde das Verfahren mit zwei verschiedenen, bevorzugt aufeinanderfolgenden Produktionsstationen PS1, PS2 beschrieben. Das Verfahren verläuft analog, wenn eine einzige Produktionsstation PSi zweimal hintereinander auf die Produktdaten-Datei PDD auf dem Produktdaten-Server CS zugreift.

Die Reihenfolge der Schritte kann von der beschriebenen Reihenfolge abweichend sein. Allerdings dürfen sicherheitskritische Vorgänge, beispielsweise Übergabe oder Entschlüsselung sensibler Daten, erst nach erfolgreicher Authentisierung erfolgen.

Eine Authentisierung der Produktionsstation PSi (Nutzer, User) gegenüber dem Tag wird durchgeführt, damit kein unberechtigter Angreifer an Produktdaten Doc kommt, um sie zu manipulieren oder auszuspähen. Eine Authentisierung des Tag T gegenüber der Produktionsstation PS wird durchgeführt, damit ein doch auf irgend eine Weise manipuliertes Tag T oder ein Tag T, das durch einen Angreifer bereitgestellt wurde, nicht weiter verwendet wird. Die Schritte Aufbau eines sicheren Kommunikationskanals und Authentisierung können mehr oder weniger voneinander getrennt sein, oder auch in einem einzigen Verfahren verwirklicht sein, z.B. in einem Protokoll zur Authentisierung mit Schlüsselableitung.

Die gegenseitige Authentisierung zwischen Tag T und Nutzer PS kann beispielsweise mittels asymmetrischer kryptografischer Verfahren erfolgen. Jeder der beiden Partner besitzt ein Schlüsselpaar aus einem öffentlichen und einem privaten Schlüssel, der öffentliche Schlüssel ist durch eine allgemein anerkannte Certification Authority (CA) zertifiziert und damit durch den anderen Partner verifizierbar. Es können auch Zertifikatsketten verwendet werden. Die Authentisierung erfolgt dann über Challenge/Response-Verfahren.

Alternativ können in Szenarien mit mehreren Unternehmen auch komplexere Zertifizierungsstrukturen zum Einsatz kommen: Jedes der Unternehmen betreibt eine eigene CA zur Zertifizierung seiner Nutzer PS, daneben können auch noch Tag Issuer eigene CAs zur Zertifizierung ihrer Tags T betreiben. Durch Querzertifizierung der CAs können so auch Nutzer PS mehrerer Unternehmen mit Tags T arbeiten, die von einem Tag Issuer bereitgestellt werden.

Die gegenseitige Authentisierung und der daran gekoppelte Aufbau eines sicheren Kanals, über den dann beliebig weitere Nachrichten ausgetauscht werden können, ist ein weit verbreitetes Verfahren, sowohl im Bereich der Smartcards (Secure Messaging) als auch im Internet (z.B. SSL/TLS, IPsec). Der sichere Kanal garantiert dann die Authentizität, Integrität und Vertraulichkeit der nachfolgend ausgetauschten Nachrichten.

Alternativ kann hier auf einen sicheren Kommunikationskanal verzichtet werden, wenn stattdessen die notwendige Sicherheit über spezielle Ausgestaltung der ausgetauschten Nachrichten garantiert wird. Wie dies umgesetzt werden kann, ist in anderen eingereichten oder einzureichenden Patentanmeldungen derselben Anmelderin aufgezeigt. Alternativ kann ein sicherer Kanal aufgebaut werden, der nur die Authentizität und Integrität der ausgetauschten Nachrichten sicherstellt, die Vertraulichkeit könnte über die spezielle Ausgestaltung der ausgetauschten Nachrichten umgesetzt werden.

In den oben beschriebenen Abläufen wird das Dokument mit den Produktdaten Doc zur Sicherstellung der Authentizität und Integrität vor dem Speichern durch den Nutzer / Produktionsstation PSi signiert. Signatur, öffentlicher Schlüssel und Zertifikat des Nutzers werden zusammen mit dem signierten Dokument verschlüsselt und auf dem Produktdaten-Server / Cloud Server CS gespeichert. Dies hat beim Lesen des Datensatzes mit den Produktdaten Doc durch einen anderen Nutzer / Produktionsstation PSi zur Folge, dass zuerst der Datensatz entschlüsselt werden muss, bevor die Signatur überprüft werden kann. Nur ein berechtigter Nutzer / Produktionsstation PSi ist damit in der Lage, die Korrektheit des Dokuments zu prüfen und auch die Identität des Autors festzustellen.

In einer alternativen Variante könnte die Signatur über das verschlüsselte Dokument D gerechnet werden. Dann könnte die Korrektheit des auf dem Produktdaten-Server / Cloud Server CS gespeicherten Datensatzes D geprüft werden, ohne ihn entschlüsseln zu müssen. Die Identität des Autors wäre dann auch für nichtberechtigte Nutzer feststellbar. In einer weiteren Variante kann die Signatur durch das Tag T gerechnet werden. Dann lässt sich zwar die Korrektheit des Dokuments Doc verifizieren, der Autor bleibt aber anonym. Es wäre nur sichergestellt, dass der Autor ein berechtigter Nutzer war.

Für die Authentisierung gegenüber dem Kommunikationspartner, das Signieren der (Produkt-)Daten Doc und die Verschlüsselung des Dokumentenschlüssels KDoc können verschieden Schlüssel(-systeme) oder derselbe Schlüssel verwendet werden. Werden verschiedene Schlüssel verwendet, so müssen auch mehrere Zertifikate vorhanden sein, dem Partner zur Verfügung gestellt werden und von diesem verifiziert werden. Alternativ kann einem Partner ein Schlüssel auch dadurch authentisch zur Verfügung gestellt werden, dass er über den sicheren Kommunikationskanal übertragen wird, bei dessen Öffnen eine Authentisierung mit einem anderen Schlüssel stattgefunden hat.

Das Signieren des Link URL ist für die Sicherheit des Systems nicht zwingend notwendig. Alle Anforderungen an die Sicherheit des gespeicherten Dokuments D lassen sich auch mit anderen Mitteln erreichen. Mit einem signierten URL lassen sich manche Manipulationen allerdings früher erkennen. Die Korrektheit des URL kann bei der Übertragung auch durch den sicheren Kanal zwischen Nutzer und Tag sichergestellt werden. Neben dem URL sollte die Signatur auch die Tag-ID und evtl. weiter Daten schützen.

Falls der sichere Kanal zwischen Nutzer / Produktionsstation PSi und Tag T auch die Vertraulichkeit der übertragenen Nachrichten schützt, kann beim Usecase / Anwendungsfall Lesen des Dokuments D bei der Übertragung des Dokumentenschlüssels KDoc vom Tag T zum Nutzer / Produktionsstation PSi auf die Verschlüsselung mit dem Public Key KP des Nutzers PSi verzichtet werden.

Typischerweise erfordert das Schreiben oder Lesen der beim Produktdaten-Server / Cloud Anbieter CS gespeicherten Daten eine Authentisierung des Nutzers PSi. Das oben beschriebene Verfahren stellt die Vertraulichkeit des Dokuments sicher. Auch kann ein Angreifer keine selbsterzeugten Dokumente unbemerkt einstellen. Erfordert der Cloud Anbieter CS aber keine Authentisierung, könnte ein Angreifer das gespeicherte Dokument löschen oder auf andere Art unbenutzbar machen. Idealerweise stellt das Tag T die Authentisierungs-Daten (Credentials) bereit, die der Nutzer PSi zur Authentisierung beim Cloud Anbieter CS benötigt. Dabei kann es sich um statische Authentisierungs-Daten / Credentials (z.B. Name und Passwort) oder besser um dynamische Authentisierungs-Daten (z.B. OTP, Einmal-Token, Challenge-Response ...) handeln.

## Patentansprüche

1. System zum Bearbeiten, insbesondere Speichern und Auslesen, von Produktdaten (Doc), umfassend:
- einen Produktdaten-Server (CS), auf dem eine Produktdaten-Datei (PDD) gespeichert oder speicherbar ist, in welcher umfasst sind:
-- die Produktdaten (Doc) in mit einem Dokumentenschlüssel (KDoc) verschlüsselter Form (D), und
-- der Dokumentenschlüssel (KDoc) in mit einem öffentlichen Schlüssel eines asymmetrischen Schlüsselpaars verschlüsselter Form (K*Doc);
- ein Produkt (P);
- ein am Produkt (P) angebrachtes Tag (T), in dem eine Zugriffsinformation (URL) auf die Produktdaten-Datei (PDD) auf dem Produktdaten-Server (CS) gespeichert oder speicherbar ist;
- zumindest eine Produktionsstation (PSi, i=1,2,3...), oder mehrere Produktionsstationen (PS1, PS2, PS3, ...), die zur Bearbeitung des Produkts (P) gemäß den Produktdaten (PD) eingerichtet ist;
**dadurch gekennzeichnet, dass**
- im Tag (T) ein asymmetrisches Schlüsselpaar umfassend einen privaten Tag-Schlüssel und einen öffentlichen Tag-Schlüssel (KT) gespeichert ist, wobei der private Tag-Schlüssel für die Produktionsstation (PSi) unzugänglich ist;
- in der Produktionsstation (PSi) ein asymmetrisches Schlüsselpaar umfassend einen privaten Stations-Schlüssel und einen öffentlichen Stations-Schlüssel (KP) gespeichert ist;
- im Tag (T) eine Verschlüsselungs-Einrichtung eingerichtet ist;
- der Dokumentenschlüssel (KDoc) in der Produktdaten-Datei (PDD) auf dem Produktdaten-Server (CS) mit dem öffentlichen Tag-Schlüssel (KT) verschlüsselt ist (K*Doc).

2. System nach Anspruch 1, wobei die Verschlüsselungs-Einrichtung im Tag (T) dazu eingerichtet ist:
- anlässlich eines Speicherns von mit dem Dokumentenschlüssel (KDoc) verschlüsselten Produktdaten (D) durch die Produktionsstation (PSi) beim Produktdaten-Server (CS): den öffentlichen Tag-Schlüssel (KT) zur Verschlüsselung des Dokumentenschlüssels (KDoc) an die Produktionsstation (PSi) bereitzustellen;
- anlässlich eines Auslesens der Produktdaten-Datei (PDD) aus dem Produkt-Server (CS) in die Produktionsstation (PSi) unter Verwendung der Zugriffsinformation (URL) aus dem Tag (T): den verschlüsselten Dokumentenschlüssel (K*Doc) vom öffentlichen Tag-Schlüssel (KT) auf den öffentlichen Stations-Schlüssel (KP) umzuverschlüsseln und den hiermit umverschlüsselten Dokumentenschlüssel (K**Doc) an die Produktionsstation (PSi) bereitzustellen.

3. Verfahren zum Erstellen einer Produktdaten-Datei zum Speichern von Produktdaten (Doc) durch eine Produktionsstation (PSi) auf einen Produktdaten-Server (CS), umfassend die Schritte:
- Bereitstellen von Produktdaten (Doc) an der Produktionsstation (PSi);
- durch die Produktionsstation (PSi), Erzeugen oder Bereitstellen eines Dokumentenschlüssels (KDoc);
- durch die Produktionsstation (PSi), Verschlüsseln zumindest der Produktdaten (Doc) mit dem Dokumentenschlüssel (KDoc) zu verschlüsselten Produktdaten (D);
- durch die Produktionsstation (PSi), Auslesen des öffentlichen Tag-Schlüssels (KT) aus dem Tag (T);
- durch die Produktionsstation (PSi), Verschlüsseln des Dokumentenschlüssels (KDoc) mit dem Tag-Schlüssel (KT) zu einem verschlüsselten Dokumentenschlüssel (K*Doc);
- durch die Produktionsstation (PSi), Erzeugen einer Produktdaten-Datei (PDD) umfassend die verschlüsselten Produktdaten (D) und den verschlüsselten Dokumentenschlüssel (K*Doc).

4. Verfahren nach Anspruch 3, weiter umfassend:
- anlässlich des Auslesens des öffentlichen Tag-Schlüssels (KT) aus dem Tag (T) an die Produktionsstation (PSi), gegenseitige Authentisierung zwischen dem Tag (T) und der Produktionsstation (PSi).

5. Verfahren zum Speichern einer Produktdaten-Datei (PDD), auf einem Produktdaten-Server (CS), umfassend die Schritte:
- durch eine Produktionsstation (PSi): Senden der Produktdaten-Datei (PDD), umfassend verschlüsselte Produktdaten und einen mit einem öffentlichen Schlüssel eines Tags verschlüsselten Dokumentenschlüssel, an den Produktdaten-Server (CS);
- beim Produktdaten-Server (CS): Speichern der Produktdaten-Datei (PDD);
- durch den Produktdaten-Server (CS): Erzeugen einer Zugriffsinformation (URL) auf die gespeicherte Produktdaten-Datei (PDD);
- durch den Produktdaten-Server (CS): Senden der Zugriffsinformation (URL) an die Produktionsstation (PSi);
- durch die Produktionsstation (PSi): Senden der Zugriffsinformation (URL) an das Tag (T);
- beim Tag (T): Speichern der Zugriffsinformation (URL).

6. Verfahren nach Anspruch 5, weiter umfassend:
- anlässlich des Sendens der Zugriffsinformation (URL) vom Produktdaten-Server (CS) an die Produktionsstation (PSi), gegenseitige Authentisierung zwischen dem Produktdaten-Server (CS) und der Produktionsstation (PSi).

7. Verfahren nach Anspruch 5 oder 6, wobei, anlässlich des Sendens der Zugriffsinformation (URL) von der Produktionsstation (PSi) an das Tag (T), mittels des privaten Stations-Schlüssels eine Stations-Signatur (SU) erzeugt wird und mit der Zugriffsinformation (URL) an das Tag (T) gesendet wird, und die Stations-Signatur (SU) im Tag (T) gespeichert wird.

8. Verfahren nach Anspruch 7, wobei im Tag (T) eine Tag-Signatur erzeugt wird, insbesondere aus der Stations-Signatur (SU) abgeleitet wird, und im Tag (T) abgespeichert wird.

9. Verfahren zum Auslesen von verschlüsselten Produktdaten (D) durch eine Produktionsstation (PSi), umfassend die Schritte:
- durch die Produktionsstation (PSi), Auslesen einer Zugriffsinformation
(URL) aus einem Tag (T);
- durch die Produktionsstation (PSi), unter Verwendung der aus dem Tag (T) ausgelesenen Zugriffsinformation (URL), Auslesen der Produktdaten-Datei (PDD), umfassend die verschlüsselten Produktdaten (D) und einen mit dem öffentlichen Schlüssel des Tags verschlüsselten Dokumentenschlüssel (K*Doc), vom Produktdaten-Server (CS).

10. Verfahren nach Anspruch 9, weiter umfassend die Schritte:
- anlässlich des Auslesens der Zugriffsinformation (URL) aus dem Tag (T): Aufbau eines sicheren Kommunikationskanals zwischen dem Tag (T) und der Produktionsstation (PSi), oder/und gegenseitige Authentisierung zwischen dem Tag (T) und der Produktionsstation (PSi); oder/und
- nach dem Auslesens der Zugriffsinformation (URL) aus dem Tag (T): durch die Produktionsstation (PSi), Authentisierung der Zugriffsinformation (URL), insbesondere durch Verifizierung einer der Zugriffsinformation (URL) beigefügten, mit einem privaten Stations-Schlüssel erzeugten Stations-Signatur mittels des entsprechenden öffentlichen Stations-Schlüssels (KP) oder der mit einem privaten Tag-Schlüssels erzeugten Tag-Signatur mittels des entsprechenden öffentlichen Tag-Schlüssels (KT).

11. Verfahren zum Entschlüsseln von verschlüsselten Produktdaten (D) durch eine Produktionsstation umfassend die Schritte:
- durch die Produktionsstation (PS), Übertragen eines mit dem öffentlichen Schlüssels eines Tags verschlüsselten Dokumentenschlüssels (K*Doc) und des eigenen öffentlichen Stations-Schlüssels (KP) an das Tag (T);
- durch das Tag (T), Umverschlüsseln des Dokumentenschlüssels (K*Doc) vom öffentlichen Tag-Schlüssel (KT) auf den öffentlichen Stations-Schlüssel (KP) zu einem umverschlüsselten Dokumentenschlüssel (K**Doc);
- durch das Tag (T), Senden des umverschlüsselten Dokumentenschlüssels (K**Doc) an die Produktionsstation (PSi);
- durch die Produktionsstation (PSi), Entschlüsseln des umverschlüsselten Dokumentenschlüssels (K**Doc) mit dem eigenen privaten Schlüssel der Produktionsstation (PSi);
- durch die Produktionsstation (PSi), Entschlüsseln der verschlüsselten Produktdaten (D) mit dem Dokumentenschlüssel (KDoc) zu Produktdaten (Doc) im Klartext.

12. Verfahren nach Anspruch 4 oder 10, wobei die bei der gegenseitigen Authentisierung erfolgende Authentisierung der Produktionsstation (PSi) gegenüber dem Produktdaten-Server (CS) mittels eines vom Tag (T) an die Produktionsstation (PSi) gesendeten, und wahlweise zudem durch das Tag (T) erzeugten, insbesondere wahlweise statischen oder dynamischen, Authentisierungstokens durchgeführt wird.

13. Verfahren nach einem der Ansprüche 3 bis 12, wobei zumindest manche öffentliche Schlüssel (KP, KT), vorzugsweise alle öffentlichen Schlüssel, mittels des Tags (T) verifizierbar sind, insbesondere mittels eines im Tag (T) abgespeicherten Zertifikats für den jeweiligen öffentlichen Schlüssel (KP, KT).

14. Tag, angebracht oder anbringbar an einem Produkt (P), eingerichtet, um einer Produktionsstation (PSi) ein Bearbeiten, insbesondere Speichern und Auslesen, von verschlüsselten Produktdaten (D) aus einem Produktdatenserver (CS) in die Produktionsstation (PSi) zu ermöglichen;
- wobei auf dem Produktdatenserver (CS) eine Produktdaten-Datei (PDD) gespeichert oder speicherbar ist, in welcher umfasst sind:
-- Produktdaten (Doc) in mit einem Dokumentenschlüssel (KDoc) verschlüsselter Form (D), und
-- der Dokumentenschlüssel (KDoc) in mit einem öffentlichen Schlüssel eines asymmetrischen Schlüsselpaars verschlüsselter Form (K*Doc);
- wobei im Tag (T) eine Zugriffsinformation (URL) auf die Produktdaten-Datei (PDD) auf dem Produktdaten-Server (CS) gespeichert oder speicherbar ist;
**dadurch gekennzeichnet, dass**
- im Tag (T) ein asymmetrisches Schlüsselpaar umfassend einen privaten Tag-Schlüssel und einen öffentlichen Tag-Schlüssel (KT) gespeichert ist, wobei der private Tag-Schlüssel für die Produktionsstation (PSi) unzugänglich ist;
- der Dokumentenschlüssel (KDoc) in der Produktdaten-Datei (PDD) auf dem Produktdaten-Server (CS) mit dem öffentlichen Tag-Schlüssel (KT) verschlüsselt ist als verschlüsselter Dokumentenschlüssel (K*Doc);
im Tag (T) eine Verschlüsselungs-Einrichtung vorgesehen ist, die dazu eingerichtet ist:
- anlässlich eines Speicherns von mit dem Dokumentenschlüssel (KDoc) verschlüsselten Produktdaten (D) durch die Produktionsstation (PSi) beim Produktdaten-Server (CS), den öffentlichen Tag-Schlüssel (KT) zur Verschlüsselung des Dokumentenschlüssels (KDoc) an die Produktionsstation (PSi) bereitzustellen;
- anlässlich eines Auslesens der Produktdaten-Datei (PDD) aus dem Produkt-Server (CS) in die Produktionsstation (PSi) unter Verwendung der Zugriffsinformation (URL) aus dem Tag (T), den verschlüsselten Dokumentenschlüssel (K*Doc) vom öffentlichen Tag-Schlüssel (KT) auf den öffentlichen Stations-Schlüssel (KP) umzuverschlüsseln und den hiermit umverschlüsselten Dokumentenschlüssel (K**Doc) an die Produktionsstation (PSi) bereitzustellen.

## Claims

1. A system for processing, in particular storing and reading out, product data (Doc), comprising:
- a product data server (CS) on which a product data file (PDD) is stored or storable, in which are comprised:
- the product data (Doc) in a form encrypted (D) with a document key (KDoc), and
- the document key (KDoc) in a form encrypted (K*Doc) with a public key of an asymmetric key pair;
- a product (P);
- a tag (T), attached to the product (P), in which access information (URL) is stored or storable for the product data file (PDD) on the product data server (CS);
- at least one production station (PSi, i = 1, 2, 3...) or several production stations (PS1, PS2, PS3,...) which are set up for processing the product (P) according to the product data (PD);
**characterized in that**
- an asymmetric key pair is stored in the tag (T), comprising a private tag key and a public tag key (KT), wherein the private tag key is inaccessible to the production station (PSi);
- an asymmetric key pair is stored in the production station (PSi), comprising a private station key and a public station key (KP);
- an encryption device is set up in the tag (T);
- the document key (KDoc) is encrypted (K*Doc) in the product data file (PDD) on the product data server (CS) with the public tag key (KT).

2. The system according to claim 1, wherein the encryption device in the tag (T) is set up for:
- upon a storing of product data (D) encrypted with the document key (KDoc) by the production station (PSi) on the product data server (CS): supplying the public tag key (KT) to the production station (PSi) for encrypting the document key (KDoc);
- upon a reading out of the product data file (PDD) from the product server (CS) to the production station (PSi) while employing the access information (URL) from the tag (T): re-encrypting the encrypted document key (K*Doc) from the public tag key (KT) to the public station key (KP) and supplying the hereby re-encrypted document key (K**Doc) to the production station (PSi).

3. A method for creating a product data file for storing product data (Doc) by a production station (PSi) on a product data server (CS), comprising the steps:
- supplying product data (Doc) at the production station (PSi);
- by the production station (PSi), generating or supplying a document key (KDoc);
- by the production station (PSi), encrypting at least the product data (Doc) with the document key (KDoc) into encrypted product data (D);
- by the production station (PSi), reading out the public tag key (KT) from the tag (T);
- by the production station (PSi), encrypting the document key (KDoc) with the tag key (KT) into an encrypted document key (K*Doc);
- by the production station (PSi), generating a product data file (PDD) comprising the encrypted product data (D) and the encrypted document key (K*Doc).

4. The method according to claim 3, further comprising:
- upon the reading out of the public tag key (KT) from the tag (T) to the production station (PSi), mutual authentication between the tag (T) and the production station (PSi).

5. A method for storing a product data file (PDD) on a product data server (CS), comprising the steps:
- by a production station (PSi): sending the product data file (PDD) comprising encrypted product data and a document key encrypted with a public key of a tag to the product data server (CS);
- at the product data server (CS): storing the product data file (PDD);
- by the product data server (CS): generating access information (URL) for the stored product data file (PDD);
- by the product data server (CS): sending the access information (URL) to the production station (PSi);
- by the production station (PSi): sending the access information (URL) to the tag (T);
- at the tag (T): storing the access information (URL).

6. The method according to claim 5, further comprising:
- upon the sending of the access information (URL) from the product data server (CS) to the production station (PSi), mutual authentication between the product data server (CS) and the production station (PSi).

7. The method according to claim 5 or 6, wherein upon the sending of the access information (URL) from the production station (PSi) to the tag (T), a station signature (SU) is generated by means of the private station key and sent to the tag (T) with the access information (URL), and the station signature (SU) is stored in the tag (T).

8. The method according to claim 7, wherein a tag signature is generated in the tag (T), in particular is derived from the station signature (SU), and is stored in the tag (T).

9. A method for reading out encrypted product data (D) by a production station (PSi), comprising the steps:
- by the production station (PSi), reading out access information (URL) from a tag (T);
- by the production station (PSi) while employing the access information (URL) read out from the tag (T), reading out the product data file (PDD), comprising the encrypted product data (D) and a document key (K*Doc) encrypted with the public key of the tag, from the product data server (CS).

10. The method according to claim 9, further comprising the steps:
- upon the reading out of the access information (URL) from the tag (T): establishing a secure communication channel between the tag (T) and the production station (PSi), or/and mutual authentication between the tag (T) and the production station (PSi); or/and
- after the reading out of the access information (URL) from the tag (T): by the production station (PSi), authenticating the access information (URL), in particular by verifying a station signature added to the access information (URL) and generated with a private station key by means of the corresponding public station key (KP) or the tag signature generated with a private tag key by means of the corresponding public tag key (KT).

11. A method for decrypting encrypted product data (D) by a production station (PSi), comprising the steps:
- by the production station (PS), transferring a document key (K*Doc) encrypted with the public key of a tag and its own public station key (KP) to the tag (T);
- by the tag (T), re-encrypting the document key (K*Doc) from the public tag key (KT) to the public station key (KP) into a re-encrypted document key (K**Doc);
- by the tag (T), sending the re-encrypted document key (K**Doc) to the production station (PSi);
- by the production station (PSi), decrypting the re-encrypted document key (K**Doc) with the production station's (PSi) own private key;
- by the production station (PSi), decrypting the encrypted product data (D) with the document key (KDoc) into plain-text product data (Doc).

12. The method according to claim 4 or 10, wherein the authentication of the production station (PSi) vis-à-vis the product data server (CS), which is effected upon the mutual authentication, is carried out by means of an, in particular electively static or dynamic, authentication token sent from the tag (T) to the production station (PSi), and electively moreover generated by the tag (T).

13. The method according to any of claims 3 to 12, wherein at least some public keys (KP, KT), preferably all public keys, are verifiable by means of the tag (T), in particular by means of a certificate, stored in the tag (T), for the respective public key (KP, KT).

14. A tag, attached to or attachable to a product (P), set up for enabling a production station (PSi) to process, in particular store and read out, encrypted product data (D) from a product data server (CS) to the production station (PSi);
- wherein on the product data server (CS) a product data file (PDD) is stored or storable, in which are comprised:
- product data (Doc) in a form encrypted (D) with a document key (KDoc), and
- the document key (KDoc) in a form encrypted (K*Doc) with a public key of an asymmetric key pair;
- wherein in the tag (T) access information (URL) is stored or storable for the product data file (PDD) on the product data server(CS);
**characterized in that**
- an asymmetric key pair is stored in the tag (T), comprising a private tag key and a public tag key (KT), wherein the private tag key is inaccessible to the production station (PSi);
- the document key (KDoc) in the product data file (PDD) on the product data server (CS) is encrypted with the public tag key (KT), as an encrypted document key (K*Doc); in the tag (T) an encryption device is provided which is set up for:
- upon a storing of product data (D), encrypted with the document key (KDoc) by the production station (PSi) on the product data server (CS): supplying the public tag key (KT) to the production station (PSi) for encrypting the document key (KDoc);
- upon a reading out of the product data file (PDD) from the product server (CS) to the production station (PSi) while employing the access information (URL) from the tag (T), re-encrypting the encrypted document key (K*Doc) from the public tag key (KT) to the public station key (KP) and supplying the hereby re-encrypted document key (K**Doc) to the production station (PSi).

## Revendications

1. Système destiné au traitement, en particulier à la mémorisation et à la lecture, de données produit (Doc), comprenant :
- un serveur de données produit (CS) sur lequel un fichier de données produit (PDD) est mémorisé ou peut être mémorisé, dans lequel sont compris :
- les données produit (Doc) sous forme cryptée (D) avec une clé de document (KDoc), et
- la clé de document (KDoc) sous forme cryptée (K*Doc) avec une clé publique d'une paire de clés asymétrique ;
- un produit (P) ;
- une étiquette (T) placée sur le produit (P) et dans laquelle une information d'accès (URL) au fichier de données produit (PDD) sur le serveur de données produit (CS) est mémorisée ou peut être mémorisé ;
- au moins un poste de production (PSi, i=1,2,3...), ou plusieurs postes de production (PS1, PS2, PS3 ...), lesquels sont équipés pour le traitement du produit (P) conformément aux données produit (PD) ;
**caractérisé en ce que**
- dans l'étiquette (T), une paire de clés asymétrique comprenant une clé privée d'étiquette et une clé publique d'étiquette (KT) est mémorisée, cependant que la clé privée d'étiquette est inaccessible au poste de production (PSi) ;
- dans le poste de production (PSi), une paire de clés asymétrique comprenant une clé de poste privée et une clé publique de poste (KP) est mémorisée ;
- dans l'étiquette (T), un équipement de cryptage est configuré ;
- la clé de document (KDoc) est cryptée (K*Doc) dans le fichier de données produit (PDD) sur le serveur de données produit (CS) avec la clé publique d'étiquette (KT).

2. Système selon la revendication 1, cependant que l'équipement de cryptage dans l'étiquette (T) est configuré pour :
- à l'occasion d'une mémorisation de données produit (D) cryptées avec la clé de document (KDoc), par le poste de production (Psi), au serveur de données produit (CS): mettre à la disposition du poste de production (PSi) la clé publique d'étiquette (KT) pour le cryptage de la clé de document (KDoc) ;
- à l'occasion d'une lecture du fichier de données produit (PDD) depuis le serveur de données produit (CS) dans le poste de production (PSi) en utilisant l'information d'accès (URL) issue de l'étiquette (T) : transcrypter la clé de document cryptée (K*Doc) de la clé publique d'étiquette (KT) à la clé publique de poste (KP) et mettre à la disposition du poste de production (PSi) la clé de document (K**Doc) ainsi transcryptée.

3. Procédé d'établissement d'un fichier de données produit pour la mémorisation de données produit (Doc) par un poste de production (PSi) sur un serveur de données produit (CS), comprenant les étapes :
- mise à disposition de données produit (Doc) au poste de production (PSi) ;
- par le poste de production (PSi), génération ou mise à disposition d'une clé de document (KDoc) ;
- par le poste de production (PSi), cryptage d'au moins les données produit (Doc) avec la clé de document (KDoc) de manière à obtenir des données produit cryptées (D) ;
- par le poste de production (PSi), lecture de la clé publique d'étiquette (KT) depuis l'étiquette (T) ;
- par le poste de production (PSi), cryptage de la clé de document (KDoc) avec la clé d'étiquette (KT) de manière à obtenir une clé cryptée de document (K*Doc) ;
- par le poste de production (PSi), génération d'un fichier de données produit (PDD) comprenant les données produit cryptées (D) et la clé de document cryptée (K*Doc).

4. Procédé selon la revendication 3, comprenant en outre :
- à l'occasion de la lecture de la clé publique d'étiquette (KT) depuis l'étiquette (T) au poste de production (PSi), authentification mutuelle entre l'étiquette (T) et le poste de production (PSi).

5. Procédé de mémorisation d'un fichier de données produit (PDD) sur un serveur de données produit (CS), comprenant les étapes :
- par un poste de production (PSi) : envoi du fichier de données produit (PDD), comprenant des données produit cryptées et une clé de document cryptée avec une clé publique d'une étiquette, au serveur de données produit (CS) ;
- au serveur de données produit (CS) : mémorisation du fichier de données produit (PDD) ;
- par le serveur de données produit (CS) : génération d'une information d'accès (URL) au fichier de données produit (PDD) mémorisé ;
- par le serveur de données produit (CS) : envoi de l'information d'accès (URL) au poste de production (PSi) ;
- par le poste de production (PSi) : envoi de l'information d'accès (URL) à l'étiquette (T) ;
- à l'étiquette (T) : mémorisation de l'information d'accès (URL).

6. Procédé selon la revendication 5, comprenant en outre :
- à l'occasion de l'envoi de l'information d'accès (URL) du serveur de données produit (CS) au poste de production (PSi), authentification mutuelle entre le serveur de données produit (CS) et le poste de production (PSi).

7. Procédé selon la revendication 5 ou 6, cependant que, à l'occasion de l'envoi de l'information d'accès (URL) du poste de production (PSi) à l'étiquette (T), au moyen de la clé privée de poste, une signature de poste (SU) est générée et est envoyée à l'étiquette (T) avec l'information d'accès (URL), et que la signature de poste (SU) est mémorisée dans l'étiquette (T).

8. Procédé selon la revendication 7, cependant que, dans l'étiquette (T), une signature d'étiquette est générée, en particulier dérivée de la signature de poste (SU), et est mémorisée dans l'étiquette (T).

9. Procédé de lecture, par un poste de production (PSi), de données produit cryptées (D), comprenant les étapes :
- par le poste de production (PSi), lecture d'une information d'accès (URL) depuis une étiquette (T) ;
- par le poste de production (PSi), en utilisant l'information d'accès (URL) lue depuis l'étiquette (T), lecture du fichier de données produit (PDD), comprenant les données produit cryptées (D) et une clé de document (K*Doc) cryptée avec la clé publique d'étiquette, du serveur de données produit (CS).

10. Procédé selon la revendication 9, comprenant en outre les étapes :
- à l'occasion de la lecture de l'information d'accès (URL) depuis l'étiquette (T) : création d'un canal sécurisé de communication entre l'étiquette (T) et le poste de production (PSi), ou / et authentification mutuelle entre l'étiquette (T) et le poste de production (PSi) ; ou / et
- après la lecture de l'information d'accès (URL) depuis l'étiquette (T) : par le poste de production (PSi), authentification de l'information d'accès (URL), en particulier par vérification d'une signature de poste jointe à l'information d'accès (URL) et générée avec une clé privée de poste, au moyen de la clé publique de poste (KP) correspondante, ou de la signature d'étiquette générée avec une clé privée d'étiquette, au moyen de la clé publique d'étiquette (KT) correspondante.

11. Procédé de décryptage de données produit cryptées (D), par un poste de production (PSi), comprenant les étapes :
- par le poste de production (PS), transmission d'une clé de document (K*Doc) cryptée avec la clé publique d'une étiquette et de la propre clé publique de poste (KP) à l'étiquette (T) ;
- par l'étiquette (T), transcryptage de la clé de document (K*Doc) de la clé publique d'étiquette (KT) à la clé publique de poste (KP) de manière à obtenir une clé de document (K**Doc) transcryptée ;
- par l'étiquette (T), envoi de la clé de document (K**Doc) transcryptée au poste de production (PSi) ;
- par le poste de production (PSi), décryptage de la clé de document (K**Doc) transcryptée, avec la propre clé privée du poste de production (PSi) ;
- par le poste de production (PSi), décryptage des données produit cryptées (D), avec la clé de document (KDoc) de manière à obtenir des données produit (Doc) en texte clair.

12. Procédé selon la revendication 4 ou 10, cependant que l'authentification du poste de production (PSi) vis-à-vis du serveur de données produit (CS) étant effectuée lors de l'authentification mutuelle est réalisée au moyen d'un jeton d'authentification envoyé par l'étiquette (T) au poste de production (PSi) et au choix généré en outre par l'étiquette (T), en particulier au choix statique ou dynamique.

13. Procédé selon une des revendications de 3 à 12, cependant qu'au moins certaines clés publiques (KP, KT), de préférence toutes les clés publiques, peuvent être vérifiées au moyen de l'étiquette (T), en particulier au moyen d'un certificat pour la clé publique (KP, KT) respective mémorisé dans l'étiquette (T).

14. Etiquette, placée ou pouvant être placée à un produit (P), configurée pour permettre à un poste de production (PSi) un traitement, en particulier mémorisation et lecture, de données produit (D) cryptées provenant d'un serveur de données produit (CS) dans le poste de production (PSi) ;
- cependant que, sur le serveur de données produit (CS), un fichier de données produit (PDD) est mémorisé ou peut être mémorisé, dans lequel sont compris :
- des données produit (Doc) sous forme cryptée (D) avec une clé de document (KDoc), et
- la clé de document (KDoc) sous forme cryptée (K*Doc) avec une clé publique d'une paire de clés asymétrique ;
- cependant que, dans l'étiquette (T), une information d'accès (URL) au fichier de données produit (PDD) sur le serveur de données produit (CS) est mémorisée ou peut être mémorisée :
**caractérisée en ce que**
- dans l'étiquette (T), une paire de clés asymétrique comprenant une clé privée d'étiquette et une clé publique d'étiquette (KT) est mémorisée, cependant que la clé privée d'étiquette est inaccessible au poste de production (PSi) ;
- la clé de document (KDoc) est cryptée dans le fichier de données produit (PDD) sur le serveur de données produit (CS) avec la clé publique d'étiquette (KT) en tant que clé de document cryptée (K*Doc) ;
dans l'étiquette (T), un équipement de cryptage est prévu, lequel est configuré pour :
- à l'occasion d'une mémorisation de données produit (D) cryptées avec la clé de document (KDoc), par le poste de production (Psi), au serveur de données produit (CS), mettre à la disposition du poste de production (PSi) la clé publique d'étiquette (KT) pour le cryptage de la clé de document (KDoc) ;
- à l'occasion d'une lecture du fichier de données produit (PDD) depuis le serveur de données produit (CS) dans le poste de production (PSi) en utilisant l'information d'accès (URL) issue de l'étiquette (T), transcrypter la clé de document cryptée (K*Doc) de la clé publique d'étiquette (KT) à la clé publique de poste (KP) et mettre à la disposition du poste de production (PSi) la clé de document (K**Doc) ainsi transcryptée.
